(19) **Europäisches Patentamt / European Patent Office / Office européen des brevets**

(11) **EP 4 344 046 A1**

(12) # EUROPEAN PATENT APPLICATION
published in accordance with Art. 153(4) EPC

(43) Date of publication:
**27.03.2024 Bulletin 2024/13**

(21) Application number: **22819903.0**

(22) Date of filing: **25.03.2022**

(51) International Patent Classification (IPC):
**H02N 1/00** (2006.01)

(52) Cooperative Patent Classification (CPC):
**B06B 1/06; H02N 1/00**

(86) International application number:
**PCT/JP2022/014616**

(87) International publication number:
**WO 2022/259714 (15.12.2022 Gazette 2022/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.06.2021 JP 2021098057**

(71) Applicants:
• **Saginomiya Seisakusho, Inc.**
**Tokyo 165-0033 (JP)**
• **The University of Tokyo**
**Bunkyo-ku, Tokyo 113-8654 (JP)**

(72) Inventors:
• **SHIMOMURA Noriko**
**Sayama-shi, Saitama 350-1395 (JP)**
• **MITSUYA Hiroyuki**
**Sayama-shi, Saitama 350-1395 (JP)**
• **SUZUKI Yuji**
**Tokyo 113-8654 (JP)**
• **MIYOSHI Tomoya**
**Tokyo 113-8654 (JP)**

(74) Representative: **Bandpay & Greuter**
**11 rue Christophe Colomb**
**75008 Paris (FR)**

(54) **VIBRATION POWER GENERATION UNIT, METHOD FOR DESIGNING VIBRATION POWER GENERATION UNIT, AND PROGRAM FOR DESIGNING VIBRATION POWER GENERATION UNIT**

(57) A vibration energy harvesting unit advantageous for thickness reduction and clear as to a frequency bandwidth in which desired harvested energy is obtained, a method for designing such a vibration energy harvesting unit, and a program for designing a vibration energy harvesting unit are provided. The vibration energy harvesting unit is formed by: a vibration energy harvesting element 1 including a fixed electrode portion extending in one direction and a movable electrode portion facing the fixed electrode portion and vibrated in one plane, the vibration energy harvesting element 1 harvesting energy by relative vibration of the fixed electrode portion and the movable electrode portion; and a vibration body 2 connected to the vibration energy harvesting element 1, vibrated by vibration of a vibration source at least in a plane direction, and transferring vibration to the vibration energy harvesting element 1.

Processed by Luminess, 75001 PARIS (FR)

**(Cont. next page)**

EP 4 344 046 A1

# FIG.2

**Description**

Technical Field

The present invention relates to a vibration energy harvesting unit, a method for designing a vibration energy harvesting unit, and a program for designing a vibration energy harvesting unit, and more specifically, relates to a vibration energy harvesting technique in a dual-mass vibration system.

Background Art

A vibration energy harvesting element which harvest energy by vibration is used in various situations as a energy source that can be arranged in a site difficult to perform maintenance frequently, as it does not require battery replacement or wire routing. The amount of energy harvest by the vibration energy harvesting element has its peak with a natural frequency at which the vibration energy harvesting element vibrates largely, and decreases as the frequency becomes away from its peak. As the peak of the amount of energy harvest becomes steeper, the frequency band in which a sufficient amount of energy harvest is obtained becomes narrower, a shift in frequency largely affects the amount of energy harvest, and the operation of the vibration energy harvesting element becomes unstable. Accordingly, in order to stabilize energy harvesting by the vibration energy harvesting element, it is preferable that a frequency band in which a necessary amount of energy harvest is obtained be wide.

From the above point, there is currently a configuration of a dual-mass vibration system in which a vibration energy harvesting element is attached to a member having a different mass and the vibration energy harvesting element is vibrated together with this member. Such a configuration is described in, for example, PTL 1. In a vibration energy harvester disclosed in PTL 1, a vibration energy harvesting unit is attached to a pedestal to form a dual-mass vibration system including a point mass including the pedestal and a weight and coil spring attached to the pedestal and a point mass including a weight and coil spring of the energy harvesting unit attached onto the pedestal. PTL 1 states that the amount of energy harvest by the vibration energy harvester of the dual-mass vibration system has two peaks on both sides of the natural frequency of the weight and coil spring of the energy harvesting unit and that the frequencies at which these peaks appear increase and decrease according to a mass ratio between the weight of the pedestal and the weight of the energy harvesting unit.

PTL 1 also states that the amount of energy harvest by the energy harvesting unit is increased by increasing the amplitude of a magnet or coil.

Citation List

Patent Literature

PTL 1: Japanese Patent Laid-Open No. 2011-172351

Summary of Invention

Technical Problem

However, in the configuration disclosed in PTL 1, the weight attached to the pedestal is vibrated by a coil spring provided between the pedestal and a slab. With such a configuration, the features such as the weight and the pedestal upsize the entire vibration energy harvester and limits are impose on a place to install the energy harvester. In addition, the weight vibrates in a direction orthogonal to the pedestal. If the amount of energy harvest is secured by increasing the amplitude of this vibration, there is a need to secure a space to vibrate the weight and it is difficult to reduce the thickness of the vibration energy harvester. An increase in thickness of the vibration energy harvester is disadvantageous for attaching the energy harvester to an indoor duct or wall.

PTL 1 also states that the two peaks of the amount of energy harvest can increase the vibration amplification rate in a frequency band around the natural frequency of the weight and coil spring of the vibration energy unit and stabilize energy harvest. However, PTL 1 only discloses a relationship between the widening of a frequency band to realize a large amount of energy harvest and the vibration amplification rate, and a desired amount of energy harvest cannot be obtained in relation to the widening of the band or the like in suitable correspondence with a specific vibration source.

The present invention aims to provide a vibration energy harvesting unit advantageous for thickness reduction and clear as to a frequency bandwidth in which desired harvested energy is obtained, a method for designing such a vibration energy harvesting unit, and a program for designing a vibration energy harvesting unit. The present invention also aims to provide a vibration energy harvesting unit capable of obtaining a desired amount of energy harvest in correspondence with a specific vibration source, a method for designing such a vibration energy harvesting unit, and a program for designing a vibration energy harvesting unit.

Solution to Problem

To solve the above problem, a vibration energy harvesting unit of an aspect of the present invention comprises: a vibration energy harvesting body comprising a fixed electrode portion extending in one direction and a movable electrode portion facing the fixed electrode portion and vibrated in one plane, the vibration energy harvesting body harvesting energy by relative vibration of the fixed electrode portion and the movable electrode portion; and a vibration body connected to the vibration energy harvesting body, vibrated by vibration of a vibration source at least in the plane direction, and transferring vibration to the vibration energy harvesting body.

A method for designing a vibration energy harvesting unit of an aspect of the present invention is a method for designing a vibration energy harvesting unit for designing a vibration energy harvesting unit comprising: a vibration energy harvesting body comprising a fixed electrode portion extending in one direction and a movable electrode portion facing the fixed electrode portion and vibrated in one plane, the vibration energy harvesting body harvesting energy by relative vibration of the fixed electrode portion and the movable electrode portion; and a vibration body connected to the vibration energy harvesting body, vibrated by vibration of a vibration source at least in the plane direction, and transferring vibration to the vibration energy harvesting body, the method comprising: an information input receiving step of receiving an input of at least one of mass information about at least one of a mass of the vibration energy harvesting body and a mass of the vibration body, frequency information about a frequency range in which the vibration energy harvesting unit has a peak of an amount of energy harvest, and energy harvest information about an amount of energy harvest harvested by the vibration energy harvesting unit in the frequency range; and an information outputting step of outputting at least one of the mass information, the frequency information, and the energy harvest information that has not been input in the information input receiving step based on information whose input has been received by the information input receiving function out of the mass information, the frequency information, and the energy harvest information.

A program for designing a vibration energy harvesting unit of an aspect of the present invention is a program for designing a vibration energy harvesting unit for designing a vibration energy harvesting unit comprising: a vibration energy harvesting body comprising a fixed electrode portion extending in one direction and a movable electrode portion facing the fixed electrode portion and vibrated in one plane, the vibration energy harvesting body harvesting energy by relative vibration of the fixed electrode portion and the movable electrode portion; and a vibration body connected to the vibration energy harvesting body, vibrated by vibration of a vibration source at least in the plane direction, and transferring vibration to the vibration energy harvesting body, the program comprising: a function of receiving an input of at least one of mass information about at least one of a mass of the vibration energy harvesting body and a mass of the vibration body, frequency information about a frequency range in which the vibration energy harvesting unit has a peak of an amount of energy harvest, and energy harvest information about an amount of energy harvest harvested by the vibration energy harvesting unit in the frequency range; and a function of outputting at least one of the mass information, the frequency information, and the energy harvest information that has not been input based on information whose input has been received by the function of receiving the input out of the mass information, the frequency information, and the energy harvest information.

Advantageous Effects of Invention

According to the above aspects, a vibration energy harvesting unit advantageous for thickness reduction and clear as to a frequency bandwidth in which desired harvested energy is obtained, a method for designing such a vibration energy harvesting unit, and a program for designing a vibration energy harvesting unit can be provided. In addition, a vibration energy harvesting unit capable of obtaining a desired amount of energy harvest in correspondence with a specific vibration source, a method for designing such a vibration energy harvesting unit, and a program for designing a vibration energy harvesting unit can be provided.

Brief Description of Drawings

[FIG. 1] A perspective view for illustrating a vibration energy harvesting unit of an embodiment of the present invention.
[FIG. 2] An exploded perspective view of the vibration energy harvesting unit shown in FIG. 1.
[FIG. 3] (a) is a top view of a vibration body 2 shown in FIG. 2 and (b) and (c) are side views thereof.
[FIG. 4] A perspective view of a energy harvesting portion of a vibration energy harvesting element shown in FIG. 2.

[FIG. 5] A top view of the energy harvesting portion shown in FIG. 4 to show a state of vibration of the energy harvesting portion.

[FIG. 6] (a) and (b) are schematic views of a movable electrode portion and a fixed electrode portion to illustrate an electret.

[FIG. 7] A graph showing a result of calculating an amplitude while changing a mass ratio between the vibration energy harvesting element and vibration body of the vibration energy harvesting unit shown in FIG. 1.

[FIG. 8] (a) is a diagram showing a single-mass vibration system model and (b) is a diagram showing a dual-mass vibration system model.

[FIG. 9] A diagram for illustrating an imbalance of mass in a vibration model shown in FIG. 8 (b).

[FIG. 10] A diagram for illustrating a method for designing a vibration energy harvesting unit of an embodiment of the present invention.

[FIG. 11] A graph showing a relationship among a peak interval, an attenuation ratio $\zeta_1$ of a vibration energy harvesting element, and a Q value in an embodiment of the present invention.

[FIG. 12] A graph for illustrating a relationship between an amount of shift in natural frequency of each of a vibration energy harvesting element and a vibration body and an amount of energy harvest.

Description of Embodiments

A vibration energy harvesting unit of an embodiment of the present invention will be described below with reference to the drawings. The drawings show examples of a technical idea, constituent members, their arrangements and relationships with each other, actions, and functions of the present embodiment and do not limit specific configurations or shapes thereof.

[Vibration energy harvesting unit]

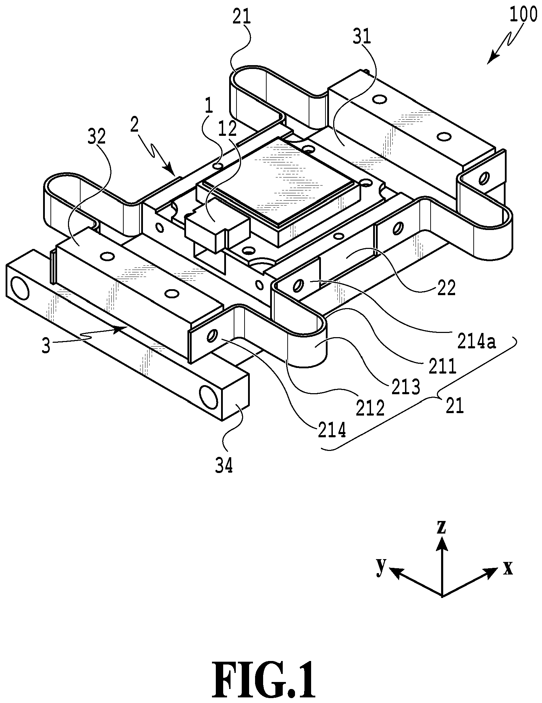

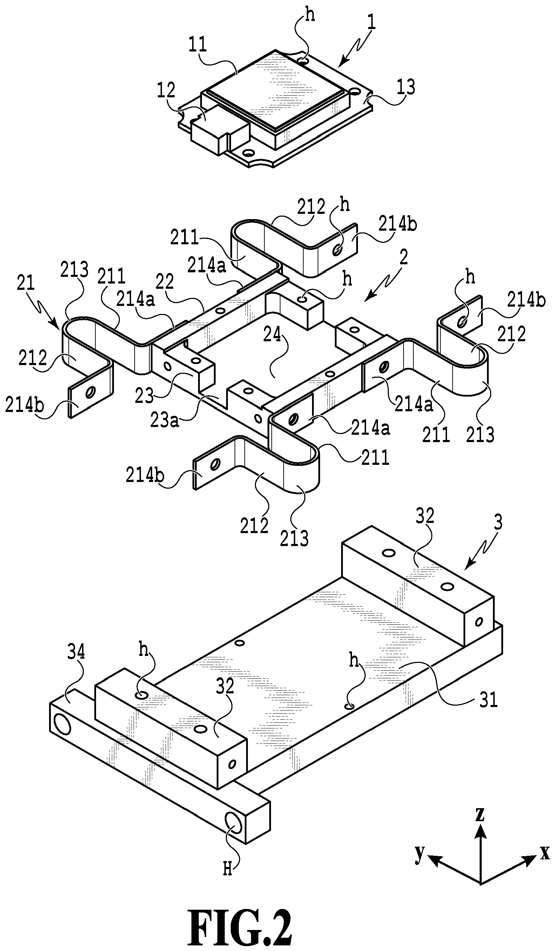

FIG. 1 is a perspective view for illustrating a vibration energy harvesting unit 100 of the present embodiment. FIG. 2 is an exploded perspective view of the vibration energy harvesting unit 100 shown in FIG. 1. The vibration energy harvesting unit 100 comprises a vibration energy harvesting body and a vibration body 2 connected to the vibration energy harvesting body and vibrated by vibration of a vibration source together with the vibration energy harvesting body. The vibration body 2 is attached to an attaching body 3 and attached to a desired attaching surface such as a wall, floor, or duct. The vibration energy harvesting body of the present embodiment is a vibration energy harvesting element 1 which harvest energy by means of electrodes and includes a circuit or the like which takes out the harvested energy. In the description of the present embodiment, a coordinate system shown in FIG. 1 and FIG. 2 is used to specify a positional relationship in the vibration energy harvesting unit 100. That is, the description of the present embodiment defines a longitudinal direction of the vibration energy harvesting unit 100 as an x direction, a direction orthogonal to the x axis as a y direction, and a direction orthogonal to the x axis and the y axis as a z direction. In the present embodiment, a length in the z direction is also referred to as "width," a side with a large numerical value of the z axis is treated as "above" a side with a small numerical value, and the small side is treated as "below" the large side. Such an up and down relationship along the z axis does not obey gravity and the vibration energy harvesting unit 100 may be attached such that the vibration energy harvesting element 1 is oriented either upward or downward. Each of the features forming the vibration energy harvesting unit 100, that is, the attaching body 3, the vibration body 2, and the vibration energy harvesting element 1, will be described below.

(Attaching body)

As shown in FIG. 2, the attaching body 3 comprises an attaching portion 31, two support bodies 32 provided at an interval to each other on the top surface of the attaching portion 31, and a vibration transfer portion 34 formed to contact at least one of the support bodies 32. The attaching portion 31 is a surface on which the support bodies 32 are placed without being fixed with an adhesive or the like. The vibration transfer portion 34 has a hole H to connect with an unshown vibration source and a member vibrated by vibration of the vibration source is inserted into the hole H. The vibration source may use, for example, vibration of a motor or the like of a facility, vibration produced by travel of a vehicle or train, or vibration produced when a person walks.

As shown in FIG. 2, the support body 32 on the vibration transfer portion 34 side is attached from the vibration transfer portion 34 to the attaching portion 31, while the other support body 32 is attached to the attaching portion 31. With such a configuration, the support body 32 is vibrated directly by the vibration transfer portion 34. As will be described later, the vibration body 2 is attached to the support bodies 32 and the vibration energy harvesting element 1 contacts the vibration body 2. The support bodies 32 can directly contact the vibration transfer portion 34 and the vibration body 2 and efficiently transfer vibration applied to the vibration transfer portion 34 to the vibration body 2 and the vibration energy harvesting element 1.

(Vibration body)

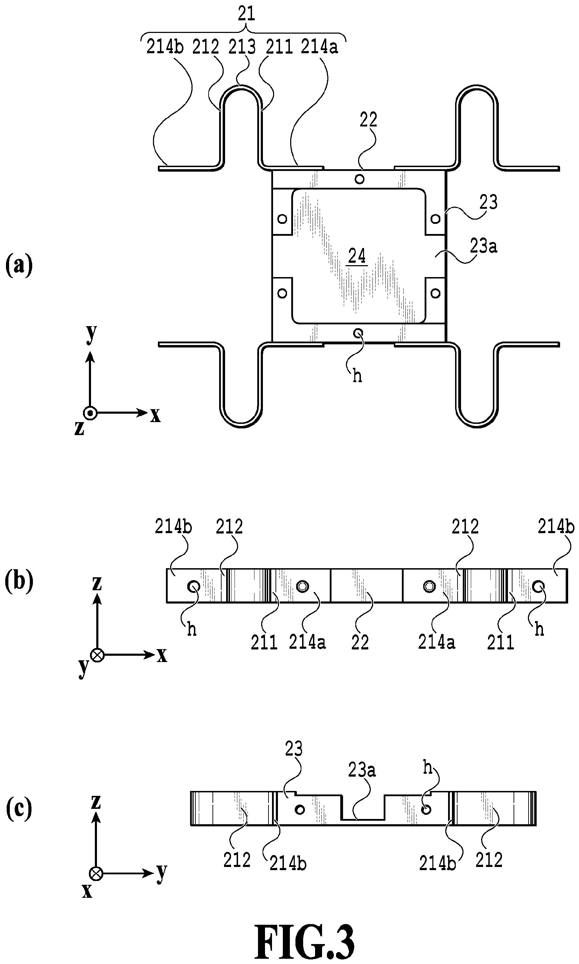

FIG. 3 (a) is a top view of the vibration body 2 shown in FIG. 2. FIG. 3 (b) is a side view of the vibration body 2 viewed in the y direction and FIG. 3 (c) is a side view of the vibration body 2 viewed in the x direction. The vibration body 2 is connected to the vibration energy harvesting element 1, vibrated by vibration of the vibration source at least in a plane direction, and configured to transfer vibration to the vibration energy harvesting element 1. As is clear from FIG. 1 and FIG. 2, the vibration body 2 comprises a fixing plate 24 that is a fixing portion to fix the vibration energy harvesting element 1 and four leaf springs 21 that are elastic bodies to transfer vibration from the vibration source to the fixing plate 24. The vibration body 2 of the present embodiment also comprises a frame body 23 to connect the leaf springs 21 to the fixing plate 24. That is, the frame body 23 is provided along the periphery of the fixing plate 24. The four leaf springs 21 are attached at intervals to each other along both ends of two opposing sides of the frame body 23. With such a configuration, each of the four leaf springs 21 can be independently vibrated.

The frame body 23 also comprises notches 23a on a pair of opposing sides of the four sides as shown in FIG. 2, FIG. 3 (a), and FIG. 3 (c). With such a configuration, the two pairs of leaf springs 21 provided with the notches 23a interposed therebetween can be vibrated without being affected by vibration of the opposing leaf springs 21 across the notches 23a. Further, the present embodiment can easily adjust a mass of the vibration body 2 by providing the notches 23a of arbitrary size.

As is clear from FIG. 1 and FIG. 2, the leaf spring 21 has one end connected to the fixing plate 24 via the frame body 23 and the other end connected to the vibration source via the support body 32 and the vibration transfer portion 34. Further, the leaf spring 21 is a so-called return spring in which a direction from one end 214a to the other end 214b is changed between the one end 214a and the other end 214b. That is, as is clear from FIG. 3 (a) or the like, an extending direction of the leaf spring 21 is oriented outside the fixing plate 24 from the one end 214a, reversed, and further changed to be oriented toward the end 214b. In the present embodiment, of the leaf spring 21, a portion extending outward is referred to as a first extending portion 211, a portion in which the extending direction is reversed is referred to as a second extending portion 212, and a portion which is between the first extending portion 211 and the second extending portion 212 and in which the extending direction is changed is referred to as a curved portion 213.

The vibration body 2 is formed of, for example, stainless steel, nickel alloy and titanium alloy, or a mixture or combination thereof. The vibration body 2, the attaching body 3, and the vibration energy harvesting element 1 are connected to one another by screwing and each have a plurality of holes h for screwing.

The leaf spring 21 that is a return spring is bent such that the first extending portion 211 and the second extending portion 212 become close to or away from each other and the fixing plate 24 is vibrated in the $\pm x$ directions. At this time, the leaf spring 21 has a constant width and thickness and is therefore stiffer than a coil spring or the like and less prone to being displaced in the y direction. Further, the leaf spring 21 resists twisting even if a moment having its center at the end 214a is applied, and the fixing plate 24 is vibrated on a virtual plane approximately only in the x direction. Incidentally, the virtual plane here is a plane parallel to the top surface of the attaching portion 31.

Further, the entire end 214a of each of the four leaf springs 21 overlaps the side surface of the fixing plate 24 such that the fixing plate 24 can be stably held from the four directions. The vibration energy harvesting element 1 is arranged such that its center of gravity is located within a range of the fixing plate 24 overlapping an area supported by the leaf springs 21. Such a configuration eliminates the occurrence of an unexpected moment or the like in a design of the vibration energy harvesting unit to be described later and helps to form a vibration energy harvesting unit having a function as designed.

(Vibration energy harvesting element)

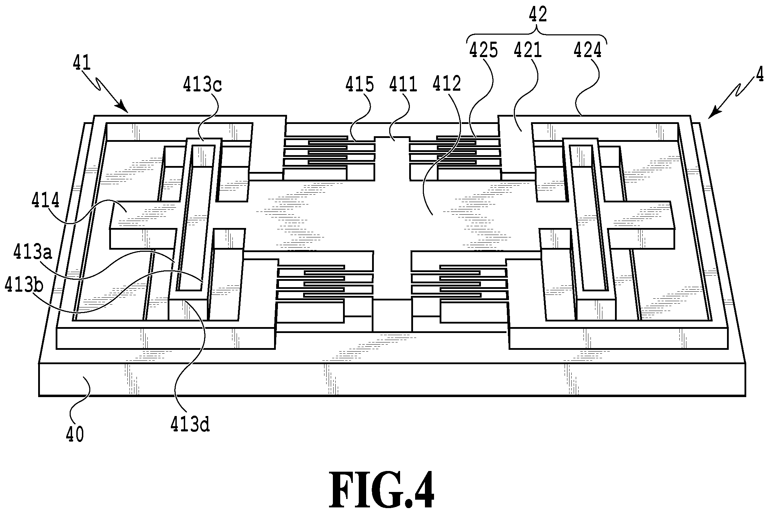

As shown in FIG. 1 and FIG. 2, the vibration energy harvesting element 1 comprises a package 11 which seals a energy harvesting portion 4 (FIG. 4) that is a mechanism for energy harvest, a stage 13 which fixes the package 11, and a connector 12 which takes out energy harvested by the energy harvesting portion 4. A surface of the stage 13 facing the fixing plate 24 is larger in area than a surface facing the energy harvesting portion 4. It is preferable that the shape of the stage 13 be substantially identical to and slightly smaller in area than the fixing plate 24. According to this configuration, after the energy harvesting portion 4 sealed by the package 11 is fixed to the stage 13, the energy harvesting portion 4 can be screwed onto the frame body 23 with unshown screws and easily aligned with the vibration body 2.

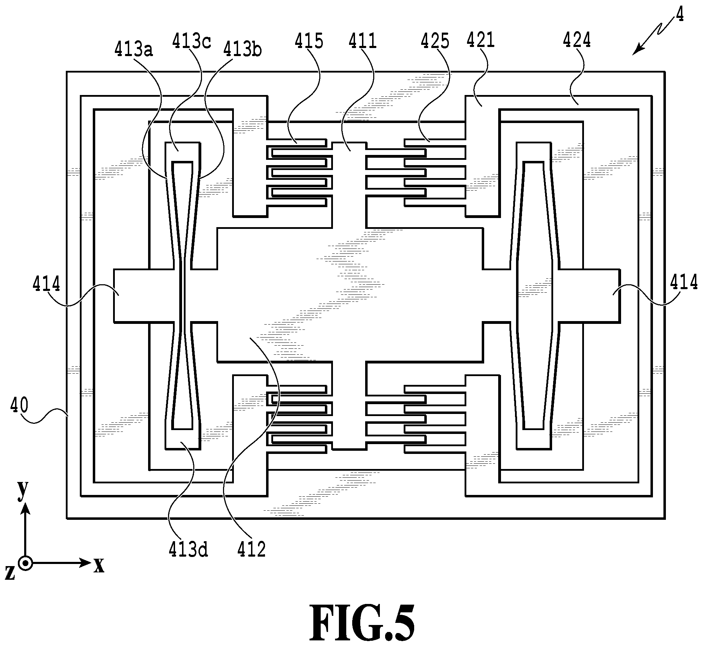

FIG. 4 is a perspective view of the energy harvesting portion 4 of the vibration energy harvesting element 1. FIG. 5 is a top view of the energy harvesting portion 4 shown in FIG. 4 to show a state of vibration of the energy harvesting portion 4. The energy harvesting portion 4 of the vibration energy harvesting element 1 comprises a base portion 40 and a movable electrode 41 and two fixed electrodes 42 fixed to the base portion 40. The movable electrode 41 comprises a plurality of movable electrode portions 415, a base shaft 411 of the plurality of movable electrode portions 415, a plate body 412 crossing the base shaft 411, a spring 413 provided on both sides of the plate body 412, and a fixing portion 414 fixing the movable electrode 41 to the base portion 40. The plurality of movable electrode portions 415 of the present embodiment are arranged in a direction (y direction) crossing the extending direction (x direction in FIG. 5) to form a comb electrode. A group of the movable electrode portions 415 is also herein referred to as "movable comb electrode." Such a energy harvesting portion 4 is formed by processing a silicon on insulator (SOI) substrate including silicon and silicon oxide.

The spring 413 includes two spring portions 413a, 413b, 413c, and 413d parallel to the base shaft 411. The spring portions 413a and 413b are arranged to face each other at an interval and both ends of the spring portions 413a and 413b are connected by the spring portions 413c and 413d, respectively.

A single fixed electrode 42 is provided on each of the two sides of the movable electrode 41. The two fixed electrodes 42 are arranged axisymmetrically to each other and comprise a plurality of fixed electrode portions 425, a base shaft 421 of the plurality of fixed electrode portions 425, and a fixing portion 424 which fixes the fixed electrode 42 to the base portion 40. The plurality of fixed electrode portions 425 are arranged in a direction (y direction) crossing the extending direction (x direction in FIG. 5) to form a comb electrode. A group of the fixed electrode portions 425 is also herein referred to as "fixed comb electrode." The fixing portion 424 has a substantially frame-like shape connected to both ends of the base shaft 421 and supports both ends of the base shaft 421. With the above configuration, the vibration energy harvesting element 4 is arranged such that the movable comb electrode and the fixed comb electrode partially overlap in the extending direction and face each other. Such a energy harvesting portion 4 of the vibration energy harvesting element 1 comprises the fixed electrode portions 425 extending in one direction and the movable electrode portions 415 facing the fixed electrode portions 425 and vibrated in one plane, and harvests energy by relative vibration of the fixed electrode portions 425 and the movable electrode portions 415.

As shown in FIG. 5, in the energy harvesting portion 4 of the present embodiment, in a case where vibration is applied in the x direction, the spring portion 413a and spring portion 413b of the spring 413 are bent in the -x and +x directions while being separated from each other by the spring portion 413c and spring portion 413d, and the plate body 412 and base shaft 411 connecting with the spring 413 are vibrated in the -x and +x directions. With the vibration of the base shaft 411, the plurality of movable electrode portions 415 are vibrated in the -x and +x directions. On the other hand, in the fixed electrode 42, the fixing portion 424 is fixed to the base portion 40 and the fixed comb electrode continued to the fixing portion 424 is also fixed. With such a configuration, in the vibration energy harvesting element 4, the movable comb electrode and the fixed comb electrode are vibrated relatively in the x direction while facing each other. The two springs 413 are both fixed to the base portion 40 by the fixing portion 414 and supported by the base shaft 411 and plate body 412 there between. Accordingly, they are vibrated on a plane parallel to the x axis without receiving a force in a rotational direction about the x axis.

However, the vibration energy harvesting element 1 may have any configuration as long as the fixed comb electrode and the movable comb electrode are vibrated on a plane and is not limited to the configuration in which the movable electrode portions 415 are vibrated in their extending direction. For example, the movable electrode portions 415 may be vibrated between the fixed comb electrodes in a longitudinal direction of the base shaft 411, namely a direction orthogonal to the extending direction.

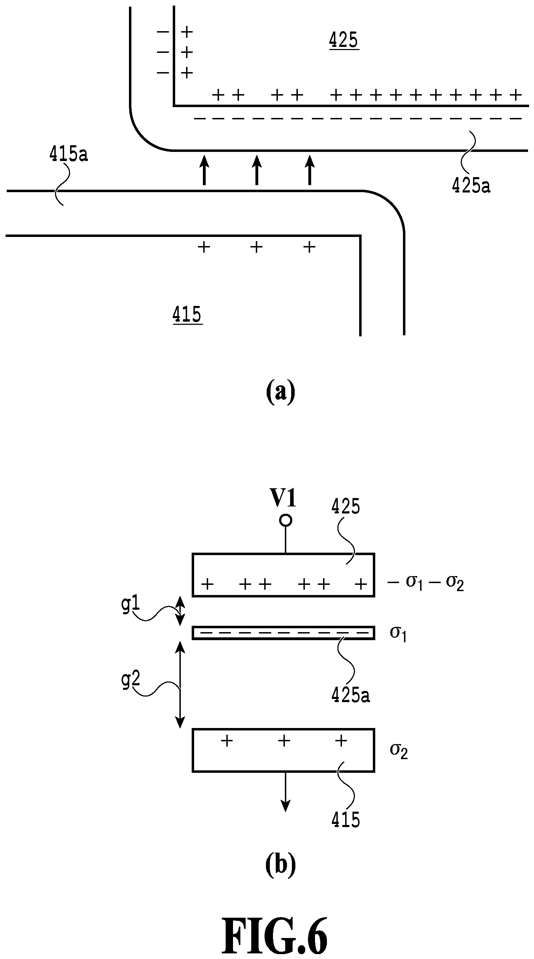

At least one of the fixed electrode portion 425 and the movable electrode portion 415 is electretized. Here, an electret indicates a substance holding a permanent electric charge and "electretized" means that an electret layer is formed on a surface of at least one of the movable electrode portion 415 and the fixed electrode portion 425. FIG. 6 (a) and FIG. 6 (b) are schematic views of the movable electrode portion 415 and the fixed electrode portion 425 to illustrate an electret. In the vibration energy harvesting element 1 of the present embodiment, surfaces of portions of the fixed electrode portion 425 and the movable electrode portion 415 facing each other comprise oxide films 425a and 415a made of $SiO_2$ (silicon dioxide), respectively, and only the oxide film on the fixed electrode portion 425 side is an electret layer fixing a negative charge. The fixing of the negative charge can be realized by, for example, bias-temperature treatment (B-T treatment) which moves an ion doped in an oxide film at a high temperature, as stated in Japanese Patent Laid-Open No. 2014-049557. In the example shown in FIG. 6 (a), the oxide film 425a to which the negative charge is fixed is formed on the surface of the fixed electrode portion 425. To the movable electrode portion 415, a positive charge in silicon (silicon) induced by the negative charge fixed to the oxide film 425a is moved as an inductive charge. Arrows in the drawing show electric flux lines.

The negative charge in the oxide film 425a does not move at room temperature and stays near the boundary between the silicon and the oxide film in the oxide film 425a, but a distance between the negative charge and the boundary is sufficiently smaller than the oxide film thickness. On the assumption that a charge density of the oxide film 425a is $\sigma_1$, the charge density $\sigma_1$ and a potential difference V1 between the movable electrode portion 415 and the fixed electrode portion 425 produce an inductive charge of a charge density $\sigma_2$ at an interface of the movable electrode portion 415. Due to a neutral condition of the charge, an inductive charge of a charge density $-\sigma_1-\sigma_2$ is induced in the fixed electrode portion 425. In the energy harvesting portion 4, energy is harvested by taking out the inductive charge.

FIG. 6 (b) is a diagram showing a model for obtaining a formula for calculating a charged voltage $V_0$ produced

between the fixed electrode portion 425 and the movable electrode portion 415 shown in FIG. 6 (a). The model shown in FIG. 6 (b) includes the fixed electrode portion 425, the oxide film 425a, and the movable electrode portion 415. Here, g1 is a distance between the negative charge fixed in the oxide film 425a and the inductive charge induced in the fixed electrode portion 425. A distance g2 is a distance between the fixed negative charge and the inductive charge induced in the movable electrode portion 415. Among g1, g2, and the charge density σ1 of the negative charge, the following formula is established.

$$V_0 = -g1 \cdot \sigma1 / \varepsilon_0$$

In the relationship of the above formula, the permittivity of the oxide films 425a and 415a is ignored. The amount of energy harvest taken out in the energy harvesting portion 4 increases with an increase in the charged voltage $V_0$.

According to the vibration energy harvesting unit 100 having the configuration explained above, since the movable comb electrode and the fixed comb electrode are vibrated on a plane, there is no need to secure a space in a direction crossing the plane and a vibration energy harvesting unit advantageous for thickness reduction can be realized. In addition, in the vibration energy harvesting unit 100 moving on the horizontal plane, interference of the attaching body 3 and the vibration body 2 with each other is small and a mechanical stiffness of the attaching body 3 in the vibrating direction can be increased as compared with a configuration of vibration in the vertical direction.

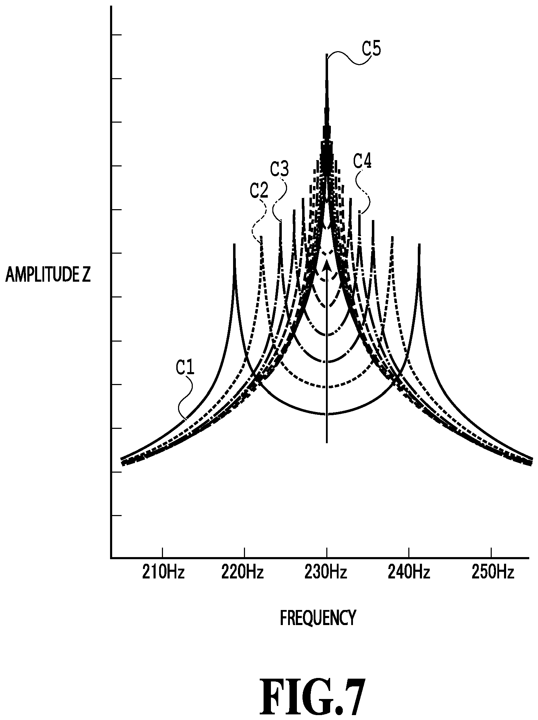

FIG. 7 is a graph showing a result of calculating an amplitude while changing a mass ratio ($m_1/m_2$) between the vibration energy harvesting element 1 and the vibration body 2 in the vibration energy harvesting unit 100 explained above. In FIG. 7, the vertical axis indicates the amplitude of the vibration energy harvesting unit 100 and the horizontal axis indicates a frequency corresponding to the amplitude. Characteristics c1 to c5 shown in FIG. 7 are of a dual-mass vibration system in which the mass ratio increases in the order of the characteristics c1, c2, c3, c4, and c5, that is, a mass $m_2$ of the vibration body 2 is smaller than a mass $m_1$ of the vibration energy harvesting element 1. It can be understood from FIG. 7 that there are two peaks in the amplitude of the vibration energy harvesting unit 100 of the dual-mass vibration system. Between the two peaks, there is a natural frequency of the vibration energy harvesting element 1 not connected to the vibration body 2 (hereinafter also referred to as "energy harvest natural frequency"). That is, the amount of energy harvest proportional to the amplitude of the vibration energy harvesting unit 100 of the present embodiment has a first frequency smaller than the energy harvest natural frequency and a second frequency larger than the energy harvest natural frequency, has a first peak at the first frequency, has a second peak at the second frequency, and has a convex downward inflection point between the first frequency and the second frequency.

It can be also understood from FIG. 7 that a range of frequency in which the first peak and the second peak appear (hereinafter also referred to as "peak interval") is changed by adjusting the mass ratio between the vibration energy harvesting element 1 and the vibration body 2 and this change occurs such that the range becomes wider with an increase in the mass ratio between the vibration energy harvesting element 1 and the vibration body 2 and becomes narrower with a decrease in the mass ratio. It can be further understood from FIG. 7 that the first peak and the second peak become smaller with an increase in the mass ratio between the vibration energy harvesting element 1 and the vibration body 2 and become larger with a decrease in the mass ratio. The present embodiment uses such a phenomenon to obtain a method and program for designing a vibration energy harvesting unit capable of accurately obtaining the peak interval between the first peak and the second peak and the smallest amount of energy harvest (amplitude) within this range. Further, a vibration energy harvesting unit capable of stably obtaining a desired amount of energy harvest in a desired frequency band is configured.

[Method (program) for designing a vibration energy harvesting unit]

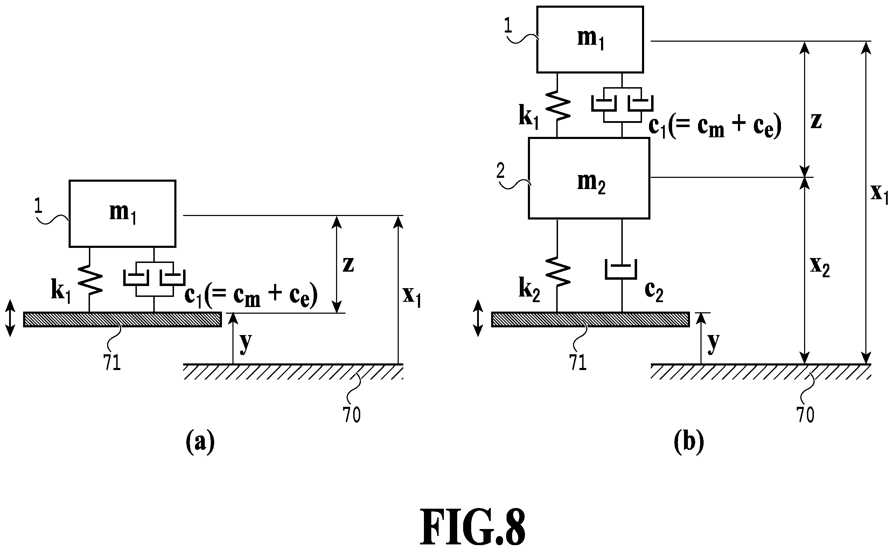

Next, a description will be given of obtainment of a relationship between an amount of energy harvest by the vibration energy harvesting unit 100 of the dual-mass vibration system explained above and a frequency range in which the amount of energy harvest is obtained. FIG. 8 (a) and FIG. 8 (b) are diagrams showing models of vibration systems used in the method for designing the vibration energy harvesting unit of the present embodiment. FIG. 8 (a) shows a single-mass vibration system in a case where the vibration energy harvesting element 1 is vibrated without being attached to the vibration body 2 and FIG. 8 (b) shows a dual-mass vibration system formed by the vibration energy harvesting element 1 and the vibration body 2. As will be described later, the present embodiment normalizes the dual-mass vibration system of FIG. 8 (b) by the single-mass vibration system shown in FIG. 8 (a). In FIG. 8 (a) and FIG. 8 (b), a position reference surface to be an origin of position is shown as 70 and a vibration reference surface to be a reference of vibration is shown as 71. $m_1$ is a mass of the vibration energy harvesting element 1, $m_2$ is a mass of the vibration body 2, $k_1$ is a spring constant of vibration of the vibration energy harvesting element 1, $k_2$ is a spring constant of vibration of the vibration body 2, and $c_1$ is a comprehensive attenuation coefficient of the vibration energy harvesting element 1 and is expressed by the sum of a mechanical attenuation coefficient $c_m$ and an electrical attenuation coefficient $c_e$. $c_2$ is a mechanical attenuation coefficient of the vibration body 2. Incidentally, the mass $m_1$ is an overall mass of the vibration energy harvesting element 1 including the package 11 and the stage 13. The mass $m_2$ is an overall mass obtained by excluding the vibration energy harvesting element 1 from the vibration energy harvesting unit 100.

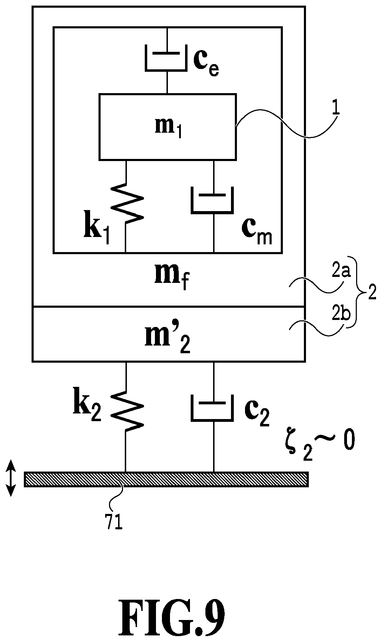

Incidentally, in the vibration models explained above, if a mass of a portion of the vibration energy harvesting unit 100 other than the vibration energy harvesting element 1 is unbalanced, a moment not considered in the design stage occurs and the vibration model deviates from a dynamical model and has a vibration energy harvest characteristic out of a design theory (deteriorated in many cases). FIG. 9 is a schematic view for illustrating this point. Here, a portion obtained by excluding the mass of the movable electrode 41 exclusive of the fixing portion 414 from the mass of the vibration energy harvesting element 1 is defined as a weight 2a, a portion of the vibration body 2 fixing the weight 2a is defined as "frame," and a mass thereof (mainly a portion of the fixing plate 24) is defined as a weight 2b. If the mass of the vibration body is $m_2$, the mass of the weight 2a is mf, and the mass of the weight 2b (mainly the portion of the fixing plate 24) is $m'_2$, the relationship of $m_2 = m'_2 + m_f$ is established. In such a configuration, the above moment occurs if a center of mass of a portion including, in the weight 2a and the weight 2b, a portion obtained by excluding the mass of the movable electrode 41 exclusive of the fixing portion 414 from the mass of the entire vibration energy harvesting element is outside the area supported by the leaf springs 21. Thus, in the present embodiment, the shape of the fixing plate 24 is designed such that the center of mass of the vibration body 2 falls within the area supported by the four leaf springs 21, more preferably such that the center of mass of the vibration energy harvesting element 1 matches a geometrical center of the vibration body 2. Incidentally, this point is based on the premise that the vibration body 2 has a structure symmetrical with respect to a plane passing through its geometrical center. The widening of the band and an increase rate of the amount of energy harvest in the design of the vibration energy harvesting unit 100 of the dual-mass vibration system of an embodiment of the present invention will be described below by the use of the models of the vibration systems of FIG. 8 (a), FIG. 8 (b), and FIG. 9.

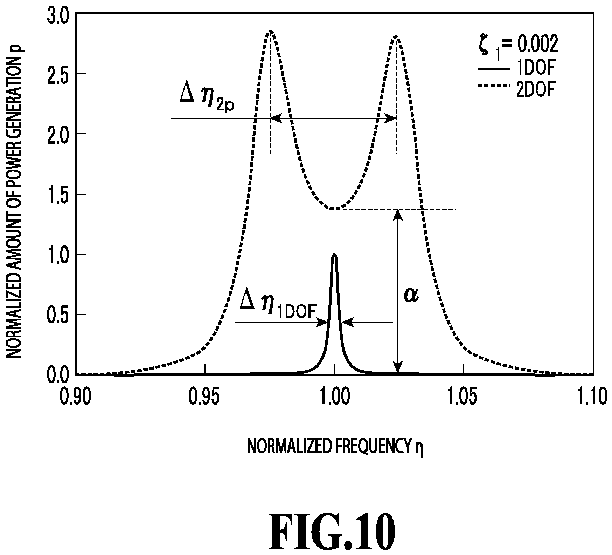

FIG. 10 is a diagram for illustrating a method for designing a vibration energy harvesting unit of the present embodiment. In FIG. 10, the horizontal axis indicates a normalized frequency $\eta$ and $\eta$ is expressed by $\eta = \omega/\Omega$. Here, $\omega$ is a frequency (frequency) and Q is a natural frequency of a target vibration system. The vertical axis indicates a normalized amount of energy harvest and p is expressed by $p = P/P_{\eta=1}$. Here, P is an amount of energy harvest and $P_{\eta=1}$ is an amount of energy harvest by the vibration energy harvesting element 1 when $\eta = 1$ and corresponds to an amount of energy harvest at a zeroth peak in the present embodiment.

(Regarding a peak interval $\Delta\eta_{2p}$)

In FIG. 10, $\Delta\eta_{2p}$ indicates a range of frequency (hereinafter also referred to as "peak interval") between the two peaks (the first peak and the second peak) of the amount of energy harvest, and the characteristic of the normalized amount of energy harvest has a convex downward inflection point between the peaks. That is, the vibration energy harvesting unit 100 of the present embodiment can realize a large amount of energy harvest in a wide range of frequency and the peak interval $\Delta\eta_{2p}$ shows an index of the widening of the band. This peak interval $\Delta\eta_{2p}$ can be obtained as follows.

$p_{1DOF}$ and $p_{2DOF}$ to be normalized amounts of energy harvest of the vibration energy harvesting element 1 and the vibration energy harvesting unit of the present embodiment are expressed by Formula (1a) and Formula (1b) below.

[Math. 1]

$$p_{2DOF} = \frac{4\,\zeta_1^2 v^2 \eta^6 (v^2 + 4\,\zeta_2^2 \eta^2)}{\left(\eta^4 - A\eta^2 + v^2\right)^2 + \left(-B\eta^3 + C\eta\right)^2} \cdots \text{ Formula (1a)}$$

$$p_{1DOF} = \frac{4\,\zeta_1^2 \eta^6}{\left(\eta^2 - 1\right)^2 + (2\zeta_1 \eta)^2} \cdots \text{ Formula (1b)}$$

Incidentally, in Formula (1a), each of A, B, and C is as follows.

$$A = (1 + v^2 + \mu + 4\zeta_1\zeta_2 v), \quad B = 2(\zeta_1(1+\mu) + \zeta_2 v), \quad C = 2\left(\zeta_1 + \frac{\zeta_2}{v}\right)$$

Further, $\mu$ is a mass ratio and is expressed by $\mu = m_1/m_2$, and $v$ is a ratio between the energy harvest natural

frequency $\Omega_1$ of the vibration energy harvesting element 1 and the vibration natural frequency $\Omega_2$ of the vibration body 2 and is expressed by $v=\Omega_1/\Omega_2$. $\zeta_1$ is an attenuation coefficient of the vibration energy harvesting element 1 in the case of the single-mass vibration system not connected to the vibration body 2 and $\zeta_2$ is an attenuation coefficient of the vibration body 2 in the case of the single-mass vibration system not connected to the vibration energy harvesting element 1.

If Formulas (1a) and (1b) above are differentiated by $\eta^2$ under a condition that $v=1$ and $\zeta_2=0$ and frequencies $\eta$ corresponding to the peaks (maximum values) of the amount of energy harvest are calculated, $\eta_2$ and $\eta_4$ are obtained as significant solutions and the peak interval $\Delta\eta_{2p}$ can be expressed by Formula (2) below.

$$\Delta\eta_{2p}=\eta_4-\eta_2 \ \dots \text{ Formula (2)}$$

(Regarding a energy harvest amount increase rate $\alpha$)

In FIG. 10, a energy harvest amount increase rate $\alpha$ is a ratio (increase rate) of the normalized amount of energy harvest $p_{2DOF}$ (the minimum point of the amount of energy harvest) when $\eta=1$ to a value $p_{1DOF}$ of the normalized amount of energy harvest (shown by a wavy line in FIG. 8) of the single-mass vibration system when $\eta=1$, and can be expressed by Formula (3) below.

$$\alpha=p_{2DOF}/p_{1DOF} \ \dots \text{ Formula (3)}$$

More specifically, $p_{2DOF}$ is a value when $\eta=1$ in Formula (1a) and Formula (1b) above and $p_{1DOF}$ is an amount of energy harvest when $\eta=1$ in the single-mass vibration system shown in FIG. 8 (a).

Here, if Formula (3) is solved about the mass ratio $\mu$ by substitution of $v=1$, Formula (4) below is obtained. However, A in Formula (4) is given by Formula (5).

[Math. 2]

$$\mu = \frac{4\zeta_1(-\zeta_2\pm\sqrt{\Lambda})}{1+4\zeta_1^2} \quad \text{Formula (4)}$$

$$\Lambda = \zeta_2^2 - \left(1+4\zeta_1^2\right)\left(\zeta_2^2\left(1-\frac{1}{\alpha}\right)-\frac{1}{4\alpha}\right) \quad \text{Formula (5)}$$

Since it can be predicted that $\zeta_1<<1$ and $\zeta_2\sim0$, the relationship of Formula (6) is established between the mass ratio $\mu$ and the energy harvest amount increase rate $\alpha$.

$$\mu \sim \frac{2}{\sqrt{\alpha}}\zeta_1 \quad \text{Formula (6)}$$

(Regarding a band widening gain $\beta$)

A band widening gain $\beta$ can be obtained as a ratio of the peak interval $\Delta\eta_{2p}$ stated above to a half width $\Delta\eta_{1DOF}$ of the frequency corresponding to the amount of energy harvest in the single-mass vibration system. That is, the half width $\Delta\eta_{1DOF}$ shown in FIG. 10 is expressed as a distance between two frequencies with half the amount of energy harvest when $\eta=1$ in the single-mass vibration system. At this time, the gain $\beta$ is expressed by:

$$\beta=\Delta\eta_{2p}/\Delta\eta_{1DOF} \ \dots \text{ Formula (7)}$$

Formula (7) is expressed as Formula (8) by $v=1$ and $\zeta_1<<1$.
[Math. 3]

$$\beta = \frac{\sqrt{\frac{2}{\sqrt{\alpha}}\zeta_1}}{\sqrt{1+2\zeta_1}-\sqrt{1-2\zeta_1}} \sim \sqrt{\frac{1}{2\sqrt{\alpha}\zeta_1}} \dots \text{ Formula (8)}$$

Here, in order to obtain a peak interval in the dual-mass vibration system, a peak interval $\Delta\eta_{2p}$ between the first peak and the second peak occurring at the frequencies $\eta_2$ and $\eta_4$ is obtained by solving the quartic equation by substitution of $dp_{2DOF}/d\eta^2=0$, $v=1$, and attenuation coefficient $\zeta_2=0$.
[Math. 4]

$$\Delta\eta_{2p} = \eta_4 - \eta_2 = -1 + \frac{F_1}{4}\sqrt{\left(1+16\frac{F_2}{F_1^2}\right)} \dots \text{ Formula (9)}$$

In Formula (9), F1 and $F_2$ are expressed by Formula (10) below.

$$\begin{cases} F_1 = 2A - B^2 \\ F_2 = \frac{\sqrt{-48+3F_1F_3}}{3}\cos\Theta \\ F_3 = 2A - C^2 \\ \Theta = \frac{1}{3}\tan^{-1}\left(-\sqrt{\frac{2}{9}\frac{(16-F_1F_3)^3}{F_1^2-F_3^2}-1}\right) \end{cases}$$
$$\dots \text{ Formula (10)}$$

[Math. 5] In Fomula (9), $\eta_2$ and $\eta_4$ are frequencies corresponding to the peaks of the first peak and the second peak shown in FIG. 10. When $\zeta_1 <<1$, $F_1$ is 4 and $F_2$ is $2\sqrt{2\zeta_1/\sqrt{\alpha}}$, and therefore $\Delta\eta_{2p}$ is expressed by Formula (11) below.
[Math. 6]

$$\Delta\eta_{2p} = \sqrt{\frac{2}{\sqrt{\alpha}}\zeta_1} \dots \text{ Formula (11)}$$

As stated above, the peak interval $\Delta\eta_{2p}$ explained above is an index of the widening of the band, and as this value increases, a large amount of energy harvest can be realized in a wider range of frequency. Further, the energy harvest amount increase rate $\alpha$ indicates a minimum value of the amount of energy harvest realized within the range of the peak interval $\Delta\eta_{2p}$, and as this value increases, a larger amount of energy harvest can be realized in the widened range of frequency.

For example, the vibration energy harvesting unit of the present embodiment can obtain a relatively large amount of energy harvest (e.g., 500 $\mu$W) from a vibration source having a frequency of 3000 Hz or less and an acceleration of 1G or less. The vibration energy harvesting unit of the present embodiment realizes a vibration system having a relatively high quality factor (hereinafter also referred to as Q value) and realizes it as one having the above-described peak interval $\Delta\eta_{2p}$ and increase rate $\alpha$ defined within the range of this high Q value.

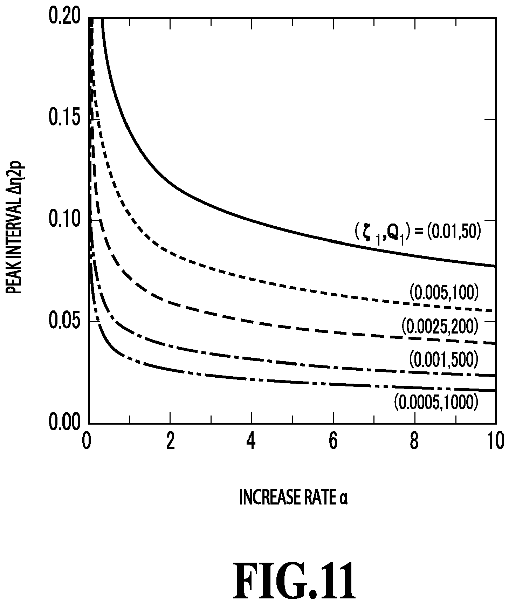

FIG. 11 is a diagram in which the relationship of Formula (11) is expressed by using the attenuation ratio $\zeta_1$ and Q value of the vibration energy harvesting element 1 as parameters. The range of the Q value shown in FIG. 11 is 50 to 1000 and the attenuation ratio $\zeta_1$ corresponding to this range is $\zeta_1=0.01$ to 0.0005. FIG. 11 shows the relationship between the peak interval $\Delta\eta_{2p}$ and the increase rate $\alpha$ for five parameter pairs of $\zeta_1$ and Q value $(\zeta_1, Q_1)$, that is, $(\zeta_1, Q_1)=(0.01, 50)$, $(0.005, 100)$, $(0.0025, 200)$, $(0.001, 500)$, and $(0.0005, 1000)$. As shown in these graphs, as the Q value increases, that is, as the attenuation ratio $\zeta_1$ decreases, the peak interval $\Delta\eta_{2p}$ decreases for the same increase rate $\alpha$.

(Design of the vibration energy harvesting unit)

In the design of the vibration energy harvesting unit, based on the relationship explained with regard to FIG. 11, for example, a peak interval $\Delta\eta_{2p}$ and increase rate $\alpha$ adapted to an environment for using the vibration energy harvesting unit of the present embodiment can be determined. Further, the structure of the vibration energy harvesting unit is determined such that it has a quality factor $Q_1$ corresponding to the determined peak interval $\Delta\eta_{2p}$ and increase rate $\alpha$. For example, if the structure of the energy harvesting vibration body is determined such that it has an attenuation ratio $\zeta_1$ corresponding to a quality factor $Q_1$ as shown by the five pairs shown in FIG. 11, the structure of the vibration energy harvesting unit of the present embodiment is determined such that the attenuation ratio $\zeta_1$ is within the range of $\zeta_1$=0.0005 to 0.01 in a configuration in which the energy harvesting vibration body portion of the electret system has a comb-like shape as described above.

In a case where the mass $m_1$ of the vibration energy harvesting element 1 and the mass $m_2$ of the vibration body 2 of the vibration energy harvesting unit of the present embodiment are determined using $Q_1$ and $\zeta_1$ shown in FIG. 11 as an example, a ratio between the mass $m_1$ of the vibration energy harvesting element 1 and the mass $m_2$ of the vibration body 2 is determined as a value in the following range in correspondence with the attenuation ratio of the vibration energy harvesting unit being in the range of $\zeta_1$=0.01 to 0.0005.

When $\mu$=$m_1$/$m_2$, Formula (12) below is established.

[Math. 7]

$$\Delta\eta_{2\mathrm{p}} = \sqrt{\frac{2}{\sqrt{\alpha}}\zeta_1} = \sqrt{\mu} \ldots \text{Formula (12)}$$

From the relationship of Formula (12), for example, when $\alpha$=1.5, a range of the mass ratio $m_1$/$m_2$ corresponding to the range of $\zeta_1$=0.0005 to 0.01 is $m_1$/$m_2$=0.0008 to 0.016. In this manner, the value of the mass ratio $m_1$/$m_2$ can be determined such that the attenuation ratio of the energy harvesting vibration body satisfies the range of $\zeta_1$=0.01 to 0.0005 according to the peak interval $\Delta\eta_{2p}$ and the increase rate $\alpha$ determined as design values as described above.

From the above relationship, the inventors of the present invention obtained a value not less than 0.0001 and not more than 0.008 as the range of the mass ratio $m_1$/$m_2$ when a minimum value of the energy harvest increase rate $\alpha$ was 1.5, a maximum value thereof was 100, a minimum value of the attenuation ratio of the vibration energy harvesting element 1 was 0.0005, and a maximum value thereof was 0.01. However, the energy harvesting unit of the present embodiment is not limited to such an attenuation ratio, energy harvest increase rate, and mass ratio. An attenuation ratio, energy harvest increase rate, and mass ratio suitable for the vibration energy harvesting unit 100 differ according to use of the vibration energy harvesting unit, an environment to which the vibration energy harvesting unit is applied, a vibration source, further a range of frequency of vibration of the vibration source, and the like.

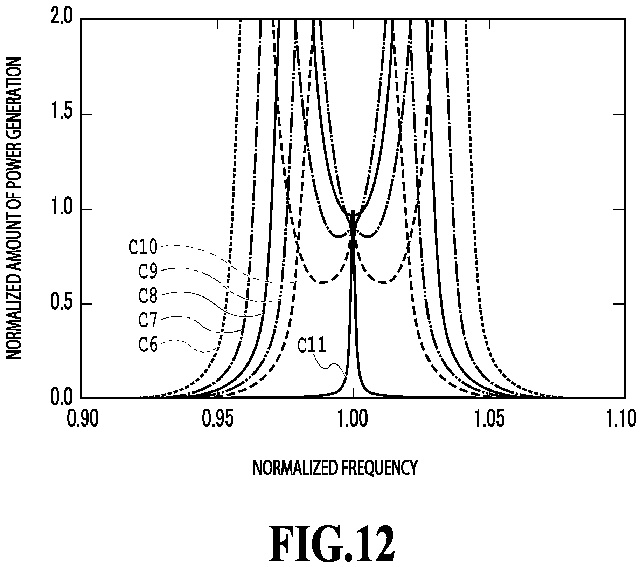

In the models used in the method for designing the vibration energy harvesting unit explained above, the energy harvest natural frequency $\Omega_1$ and the vibration natural frequency $\Omega_2$ may be identical to or different from each other. However, the characteristic of the minimum amount of energy harvest in the peak interval of the vibration energy harvesting unit, that is, the amount of energy harvest at the convex downward inflection point between the peaks changes with an increase in difference between the vibration natural frequency and energy harvest natural frequency $\Omega_1$ and $\Omega_2$. FIG. 12 is a graph for illustrating this point. In the graph of FIG. 12, the horizontal axis indicates a normalized frequency of the dual-mass vibration system model shown in FIG. 8 (b) normalized by the single-mass vibration system model shown in FIG. 8 (a), and the vertical axis indicates a normalized amount of energy harvest corresponding to the normalized frequency. Of the characteristics c6 to c11 in FIG. 12, the characteristic c11 is of a single-mass vibration system of only the vibration energy harvesting element 1 and c8 is of a dual-mass vibration system in which the energy harvest natural frequency is substantially identical to the vibration natural frequency. A ratio between the energy harvest natural frequency $\Omega_1$ and the vibration natural frequency $\Omega_2$ is referred to as a frequency ratio $\Omega_1$/$\Omega_2$, and the frequency ratio $\Omega_1$/$\Omega_2$ is expressed by Formula (13).

[Math. 8]

$$\frac{\Omega_1}{\Omega_2} = \frac{1}{1+\frac{\mu}{\sqrt{2}}} \pm \frac{1}{4}\sqrt{\mu} \ldots \text{Formula (13)}$$

The characteristic c6 is one in a case where the frequency ratio between the vibration energy harvesting element 1 and the vibration body 2 is smaller than $1/(1+\mu/\sqrt{2})$ by $\sqrt{\mu}/2$. The characteristic c7 is one in a case where the frequency ratio is smaller than $1/(1+\mu/\sqrt{2})$ by $\sqrt{\mu}/4$. The characteristic c9 is one in a case where the frequency ratio is larger than $1/(1+\mu/\sqrt{2})$ by $\sqrt{\mu}/4$. The characteristic c10 is one in a case where the frequency ratio is larger than $1/(1+\mu/\sqrt{2})$ by $\sqrt{\mu}/2$.

Incidentally, the characteristic c6 to characteristic c10 shown in FIG. 12 are each calculated on the assumption that $\zeta=0.001$, $\alpha=1$, and $\mu=0.002$.

The inventors of the present invention focused attention on the fact that as shown in FIG. 12, a difference between the frequency ratio and $1/(1+\mu/\sqrt{2})$ shifts frequencies at which peaks appear and the shift changes an amount of energy harvest and a frequency at which the amount of energy harvest takes a minimum value. A decrease in harvested energy caused by a shift of the frequency ratio is allowed up to 15% and the frequency ratio falling within the range of Formula (13) above is treated as one of design conditions.

Further, as explained above, the method for designing the vibration energy harvesting unit of the present embodiment can obtain a mass ratio corresponding to a desired energy harvest increase rate or peak interval by the use of Formula (6), Formula (8), and Formula (12). Further, in contrast, the present embodiment can first determine a mass ratio between the vibration energy harvesting element 1 and the vibration body 2 of the vibration energy harvesting unit and predict a energy harvest increase rate and a peak interval of the vibration energy harvesting unit formed by these vibration element 1 and vibration body 2. That is, according to the method for designing the vibration energy harvesting unit of the present embodiment, an input of at least one of mass information about at least one of the mass of the vibration energy harvesting element 1 and the mass of the vibration body 2, frequency information about a frequency range including the first peak and the second peak of the vibration energy harvesting unit, and energy harvest information about an amount of energy harvest harvested by the vibration energy harvesting unit in the frequency range can be received, and at least one of the mass information, the frequency information, and the energy harvest information that has not been input can be output based on the information whose input has been accepted out of the above information.

Further, the present embodiment can design the vibration energy harvesting unit described above by means of a computer and construct a program for designing the vibration energy harvesting unit for executing the above method. Such a program includes a function of receiving an input of at least one of the mass information, frequency information, and energy harvest information stated above, a function of calculating information that has not been input based on the input information, and a function of outputting the result of calculation. The function of receiving an input is formed by, for example, a user interface such as a keyboard or voice input device, display screen, or touch pen, and a central processing unit (CPU) or graphics processing unit (GPU) which controls the hardware. The function of calculating information is formed by a CPU which executes arithmetic processing, a storage unit which temporarily or non-temporarily stores data used for processing and input data, a working memory used for arithmetic operations, and the like. The function of outputting is formed by, for example, a voice input device, display screen, printer, and CPU or GPU controlling them.

Further, such a program for designing the vibration energy harvesting unit may input or output the peak interval shown in, for example, FIG. 10 or FIG. 11, as the frequency information. The peak interval is expressed by a range of frequency between peaks that the dual-mass vibration system shown by the model of FIG. 8 (b) has at the respective two frequencies. Further, the program for designing the vibration energy harvesting unit may input or output the band widening gain $\beta$ shown in Formula (8) as the frequency information. Further, the program for designing the vibration energy harvesting unit may input or output the energy harvest amount increase rate $\alpha$ shown in Formula (6) as the energy harvest information.

(1) The vibration energy harvesting unit 100 described above comprises: the vibration energy harvesting element 1 comprising the fixed electrode portion 425 extending in one direction and the movable electrode portion 415 facing the fixed electrode portion 425 and vibrated on one plane, the vibration energy harvesting element 1 harvesting energy by relative vibration of the fixed electrode portion 425 and the movable electrode portion 415; and the vibration body 2 connected to the vibration energy harvesting element 1, vibrated by vibration of the vibration source at least in a plane direction, and transferring vibration to the vibration energy harvesting element 1. With such a configuration, the vibration energy harvesting unit 100 allows the movable electrode portion and the fixed electrode portion to vibrate in one plane with respect to each other, eliminates the need to secure a space for vibration in a direction orthogonal to the plane, and has an advantage for thickness reduction.

(2) In (1), the plurality of fixed electrode portions 425 are arranged in a direction crossing the extending direction to form a fixed comb electrode and the plurality of movable electrode portions 415 are arranged in a direction crossing the extending direction to form a movable comb electrode. With such a configuration, the vibration energy harvesting unit 100 can arrange a number of fixed electrode portions 425 and a number of movable electrode portions 415 at high density such that they face each other, and obtain a large amount of energy harvest.

(3) In (1) or (2), at least one of the fixed electrode portion and the movable electrode portion is electretized. With such a configuration, static electricity can be stably held in the electret material for a long period and energy harvest between the fixed electrode portion 425 and the movable electrode portion 415 can be stabilized.

(4) In (1) to (3), an amount of energy harvest harvested by the vibration energy harvesting body has a first peak at a first frequency smaller than a natural frequency of the vibration energy harvesting body in the single-mass vibration system when not connected to the vibration body, a second peak at a second frequency larger than the natural frequency, and a convex downward inflection point between the first frequency and the second frequency. With such a configuration, energy can be obtained in the peak interval between the first peak and the second peak and a range of frequency in which energy can be obtained can be increased.

(5) In (1) to (4), the vibration body 2 comprises the fixing plate 24 which fixes the vibration energy harvesting element 1 and the leaf spring 21 which transfers vibration from the vibration source to the fixing plate 24, and the leaf spring 21 is elastically deformed in the direction of extension of the fixed electrode portion 425. With such a configuration, the fixing plate 24 is vibrated mainly in a direction in which the leaf spring 21 is elastically deformed, and the movable electrode portion 415 and the fixed electrode portion 425 are opposed to each other and vibrated while maintaining a constant interval. Accordingly, a potential between the movable electrode portion 415 and the fixed electrode portion 425 becomes stable and energy harvest performed by the movable electrode 41 and the fixed electrode 42 can be stabilized.

(6) In (5), the leaf spring 21 has one end 214a connected to the fixing plate 24 and the other end 214b connected to the vibration source, and a direction from the one end 214a side toward the other end 214b side is changed between the one end 214a and the other end 214b. With such a configuration, a length of protrusion of the leaf spring 21 to the outside can be reduced while maintaining the elasticity of the leaf spring 21 and a configuration advantageous for downsizing the vibration energy harvesting unit can be achieved.

(7) In (4), an increase rate obtained by normalizing amounts of energy harvest in a peak interval that is a range of frequency between the first peak and the second peak and at an inflection point by an amount of energy harvest harvested at the natural frequency by the vibration energy harvesting element 1 of the single-mass vibration system has a value with the attenuation ratio of the vibration energy harvesting element 1 in a range of 0.0005 to 0.01. With such a configuration, a large amount of energy harvest can be efficiently obtained especially suitably in correspondence with a vibration source with a small acceleration. Further, the peak interval and the increase rate of the amount of energy harvest can be obtained in conformity with a vibration system with a small attenuation ratio, namely a large Q value.

(8) In (4), an increase rate obtained by normalizing amounts of energy harvest in a peak interval that is a range of frequency between the first peak and the second peak and at an inflection point by an amount of energy harvest harvested at the natural frequency by the vibration energy harvesting element 1 of the single-mass vibration system has a value when a mass ratio between the vibration energy harvesting body and the vibration body is in a range of 0.0001 to 0.008. With such a configuration, a large amount of energy harvest can be efficiently obtained especially suitably in correspondence with a vibration source with a small acceleration. Further, the mass ratio between the vibration energy harvesting element 1 and the vibration body 2 can be obtained in conformity with a vibration system with a small attenuation ratio, namely a large Q value.

(9) In (1) to (8), the vibration energy harvesting element 1 is arranged within a frame forming the vibration body 2. With such a configuration, an imbalance in mass can be prevented from occurring in the vibration energy harvesting unit 100, the occurrence of a moment unpredicted in the design stage can be avoided, and the vibration energy harvesting unit 100 can be appropriately designed.

(10) A method for designing a vibration energy harvesting unit for designing a vibration energy harvesting unit comprising: a vibration energy harvesting body comprising a fixed electrode portion extending in one direction and a movable electrode portion facing the fixed electrode portion and vibrated in one plane, the vibration energy harvesting body harvesting energy by relative vibration of the fixed electrode portion and the movable electrode portion; and a vibration body connected to the vibration energy harvesting body, vibrated by vibration of a vibration source at least in a plane direction, and transferring vibration to the vibration energy harvesting body, the method comprising: a step of receiving an input of at least one of mass information about at least one of a mass of the vibration energy harvesting body and a mass of the vibration body, frequency information about a frequency range in which the vibration energy harvesting unit has a peak of an amount of energy harvest, and energy harvest information about an amount of energy harvest harvested by the vibration energy harvesting unit in the frequency range; and a step of outputting at least one of the mass information, the frequency information, and the energy harvest information that has not been input based on information whose input has been received in the step of receiving the input out of the mass information, the frequency information, and the energy harvest information. With such a configuration, at least one of the mass information, frequency information, and energy harvest information about the vibration energy harvesting unit can be input and at least one of the mass information, frequency information, and energy harvest information that has not been input can be obtained. Accordingly, a vibration energy harvesting unit capable of obtaining a desired amount of energy harvest in a desired frequency range can be designed.

(11) In (10), the vibration energy harvesting unit has two peaks of the amount of energy harvest in the frequency range, and the frequency information includes information about a frequency range between the two peaks. With such a configuration, the frequency range between the two peaks can be obtained as a frequency range in which a desired amount of energy harvest can be obtained.

(12) In (11), the vibration energy harvesting unit 100 has a convex downward inflection point between the two peaks, and the frequency information includes $\beta$ that is a ratio between $\Delta\eta_1$, which is a frequency range corresponding to a zeroth peak occurring at the natural frequency of the vibration energy harvesting body in a single-mass vibration system when not connected to the vibration body, and a peak interval $\Delta\eta_{2p}$, which is a frequency range between the two peaks, and $\beta$ has the relationship of Formula (8) with $\alpha$, which is a ratio of the inflection point to the zeroth peak, and $\zeta_1$, which is an attenuation ratio of the vibration energy harvesting body. With such a configuration, a relationship between an index of a widening of a band of frequency and an index of an increase rate of the amount of energy harvest can be obtained, both of them having a trade-off relationship with each other are adjusted, and a desired vibration energy harvesting unit can be designed.

(13) In (12), $\alpha$ has the relationship of Formula (6) between a mass ratio $\mu$, which is a ratio $m_1/m_2$ between the mass $m_1$ of the vibration energy harvesting body and the mass of the vibration body $m_2$, and $\zeta_1$, which is an attenuation ratio of the vibration energy harvesting body. With such a configuration, the mass of the vibration body 2 with respect to the vibration energy harvesting element 1 of the vibration energy harvesting unit can be determined such that a desired amount of energy harvest is obtained. Further, in contrast, an amount of energy harvest by the vibration energy harvesting unit can be predicted from the specifications of the vibration energy harvesting element 1 and the vibration body 2.

(14) In (12) or (13), the energy harvest information includes information about an amount of energy harvest at the inflection point. With such a configuration, a minimum amount of energy harvest in the peak interval can be obtained and the vibration energy harvesting unit can be designed such that a desired amount of energy harvest is not less than this amount of energy harvest.

(15) In (12) to (14), the natural frequency $\Omega_1$ of the vibration energy harvesting body in the single-mass vibration system when not connected to the vibration body 2 and the natural frequency $\Omega_2$ of the vibration body 2 in the single-mass vibration system when not connected to the vibration energy harvesting element 1 have a relationship of Formula (13) with the mass ratio $\mu$ that is the ratio $m_1/m_2$ between the mass $m_1$ of the vibration energy harvesting element 1 and the mass $m_2$ of the vibration body 2. With such a configuration, the vibration energy harvesting element 1 and the vibration body 2 forming a desired vibration energy harvesting unit can be selected or designed in consideration of the respective natural frequencies.

(16) The program for designing the vibration energy harvesting unit explained above is a program for designing a vibration energy harvesting unit for designing a vibration energy harvesting unit comprising: a vibration energy harvesting body comprising a fixed electrode portion extending in one direction and a movable electrode portion facing the fixed electrode portion and vibrated in one plane, the vibration energy harvesting body harvesting energy by relative vibration of the fixed electrode portion and the movable electrode portion; and a vibration body connected to the vibration energy harvesting body, vibrated by vibration of a vibration source at least in a plane direction, and transferring vibration to the vibration energy harvesting body, the program comprising: a function of receiving an input of at least one of mass information about at least one of a mass of the vibration energy harvesting body and a mass of the vibration body, frequency information about a frequency range in which the vibration energy harvesting unit has a peak of an amount of energy harvest, and energy harvest information about an amount of energy harvest harvested by the vibration energy harvesting unit in the frequency range; and a function of outputting at least one of the mass information, the frequency information, and the energy harvest information that has not been input based on information whose input has been received by the function of receiving the input out of the mass information, the frequency information, and the energy harvest information. With such a configuration, at least one of the mass information, frequency information, and energy harvest information about the vibration energy harvesting unit can be input and at least one of the mass information, frequency information, and energy harvest information that has not been input can be obtained. Accordingly, a vibration energy harvesting unit capable of obtaining a desired amount of energy harvest in a desired frequency range can be designed by the use of a computer program.

Reference Signs List

| | |
|---|---|
| 1 | vibration energy harvesting element |
| 2 | vibration body |
| 3 | attaching body |
| 4 | energy harvesting portion |
| 11 | package |
| 13 | stage |
| 21 | leaf spring |
| 23 | frame body |
| 23a | notch |

| 24 | fixing plate |
| 31 | attaching portion |
| 32 | support body |
| 34 | vibration transfer portion |
| 40 | base portion |
| 41 | movable electrode |
| 42 | fixed electrode |
| 100 | vibration energy harvesting unit |
| 211 | first extending portion |
| 212 | a portion in which an extending direction is reversed is a second extending portion |
| 213 | curved portion |
| 214a, 214b | end |
| 411, 421 | base shaft |
| 412 | plate body |
| 413 | spring |
| 413a, 413b, 413c, 413d | spring portion |
| 414, 424 | fixing portion |
| 415 | movable electrode portion |
| 415a, 425a | oxide film |
| 425 | fixed electrode portion |

**Claims**

1. A vibration energy harvesting unit comprising:

   a vibration energy harvesting body comprising a fixed electrode portion extending in one direction and a movable electrode portion facing the fixed electrode portion and vibrated in one plane, the vibration energy harvesting body harvesting energy by relative vibration of the fixed electrode portion and the movable electrode portion; and
   a vibration body connected to the vibration energy harvesting body, vibrated by vibration of a vibration source at least in the plane direction, and transferring vibration to the vibration energy harvesting body.

2. The vibration energy harvesting unit according to claim 1, wherein a plurality of the fixed electrode portions are arranged in a direction crossing the extending direction to form a fixed comb electrode, and a plurality of the movable electrode portions are arranged in a direction crossing the extending direction to form a movable comb electrode.

3. The vibration energy harvesting unit according to claim 1 or 2, wherein at least one of the fixed electrode portion and the movable electrode portion is electretized.

4. The vibration energy harvesting unit according to any one of claims 1 to 3, wherein an amount of energy harvest harvested by the vibration energy harvesting body has a first peak at a first frequency smaller than a natural frequency of the vibration energy harvesting body in a single-mass vibration system when not connected to the vibration body, a second peak at a second frequency larger than the natural frequency, and a convex downward inflection point between the first frequency and the second frequency.

5. The vibration energy harvesting unit according to any one of claims 1 to 4, wherein the vibration body comprises a fixing portion which fixes the vibration energy harvesting body and an elastic body which transfers vibration from the vibration source to the fixing portion, and
   the elastic body is elastically deformed in the direction of extension of the fixed electrode portion.

6. The vibration energy harvesting unit according to claim 5, wherein the elastic body has one end connected to the fixing portion and the other end connected to the vibration source, and a direction from a side of the one end to a side of the other end is changed between the one end and the other end.

7. The vibration energy harvesting unit according to claim 4, wherein an increase rate obtained by normalizing amounts of energy harvest in a peak interval that is a range of frequency between the first peak and the second peak and at the inflection point by an amount of energy harvest harvested at the natural frequency by the vibration energy harvesting body of the single-mass vibration system has a value with an attenuation ratio of the vibration energy harvesting body in a range from 0.0005 to 0.01.

8. The vibration energy harvesting unit according to claim 4, wherein an increase rate obtained by normalizing amounts of energy harvest in a peak interval that is a range of frequency between the first peak and the second peak and at the inflection point by an amount of energy harvest harvested at the natural frequency by the vibration energy harvesting body of the single-mass vibration system has a value in a case where a mass ratio between the vibration energy harvesting body and the vibration body are in a range from 0.0001 to 0.008.

9. The vibration energy harvesting unit according to any one of claims 1 to 8, wherein the vibration energy harvesting body is arranged within a frame forming the vibration body.

10. A method for designing a vibration energy harvesting unit for designing a vibration energy harvesting unit comprising: a vibration energy harvesting body comprising a fixed electrode portion extending in one direction and a movable electrode portion facing the fixed electrode portion and vibrated in one plane, the vibration energy harvesting body harvesting energy by relative vibration of the fixed electrode portion and the movable electrode portion; and a vibration body connected to the vibration energy harvesting body, vibrated by vibration of a vibration source at least in the plane direction, and transferring vibration to the vibration energy harvesting body,
the method comprising:

a step of receiving an input of at least one of mass information about at least one of a mass of the vibration energy harvesting body and a mass of the vibration body, frequency information about a frequency range in which the vibration energy harvesting unit has a peak of an amount of energy harvest, and energy harvest information about an amount of energy harvest harvested by the vibration energy harvesting unit in the frequency range; and

a step of outputting at least one of the mass information, the frequency information, and the energy harvest information that has not been input based on information whose input has been received in the step of receiving the input out of the mass information, the frequency information, and the energy harvest information.

11. The method for designing a vibration energy harvesting unit according to claim 10, wherein the vibration energy harvesting unit has two peaks of an amount of energy harvest in the frequency range, and the frequency information includes information about a range of frequency between the two peaks.

12. The method for designing a vibration energy harvesting unit according to claim 11, wherein the vibration energy harvesting unit has a convex downward inflection point between the two peaks, the frequency information includes $\beta$ that is a ratio between $\Delta\eta_1$, which is a frequency range corresponding to a zeroth peak occurring at a natural frequency of the vibration energy harvesting body in a single-mass vibration system when not connected to the vibration body, and a peak interval $\Delta\eta_{2p}$, which is a frequency range between the two peaks, and $\beta$ has the following relationship with $\alpha$, which is a ratio of the inflection point to the zeroth peak, and $\zeta_1$, which is an attenuation ratio of the vibration energy harvesting body:

[Math. 9]

$$\beta \sim \sqrt{\frac{1}{2\sqrt{\alpha}\,\zeta_1}}$$

13. The method for designing a vibration energy harvesting unit according to claim 12, wherein the $\alpha$ has the following relationship with a mass ratio $\mu$, which is a ratio $m_1/m_2$ between a mass $m_1$ of the vibration energy harvesting body and a mass of the vibration body $m_2$, and the attenuation ratio $\zeta_1$:

[Math. 10]

$$\mu \sim \frac{2}{\sqrt{\alpha}} \zeta_1$$

14. The method for designing a vibration energy harvesting unit according to claim 12 or 13, wherein the energy harvest information includes information about an amount of energy harvest at the inflection point.

15. The method for designing a vibration energy harvesting unit according to any one of claims 12 to 14, wherein a natural frequency $\Omega_1$ of the vibration energy harvesting body in a single-mass vibration system when not connected to the vibration body and a natural frequency $\Omega_2$ of the vibration body in a single-mass vibration system when not connected to the vibration energy harvesting body have the following relationship with a mass ratio $\mu$ that is a ratio $m_1/m_2$ between a mass $m_1$ of the vibration energy harvesting body and a mass $m_2$ of the vibration body:

[Math. 11]

$$\frac{\Omega_1}{\Omega_2} = \frac{1}{1 + \dfrac{\mu}{\sqrt{2}}}$$

16. A program for designing a vibration energy harvesting unit for designing a vibration energy harvesting unit comprising: a vibration energy harvesting body comprising a fixed electrode portion extending in one direction and a movable electrode portion facing the fixed electrode portion and vibrated in one plane, the vibration energy harvesting body harvesting energy by relative vibration of the fixed electrode portion and the movable electrode portion; and a vibration body connected to the vibration energy harvesting body, vibrated by vibration of a vibration source at least in the plane direction, and transferring vibration to the vibration energy harvesting body, the program comprising:

   a function of receiving an input of at least one of mass information about at least one of a mass of the vibration energy harvesting body and a mass of the vibration body, frequency information about a frequency range in which the vibration energy harvesting unit has a peak of an amount of energy harvest, and energy harvest information about an amount of energy harvest harvested by the vibration energy harvesting unit in the frequency range; and
   a function of outputting at least one of the mass information, the frequency information, and the energy harvest information that has not been input based on information whose input has been received by the function of receiving the input out of the mass information, the frequency information, and the energy harvest information.

# FIG.1

# FIG.2

**FIG.3**

**FIG.4**

FIG.5

**(a)**

**(b)**

# FIG.6

FIG.7

**FIG.8**

EP 4 344 046 A1

**FIG.9**

**FIG.10**

FIG.11

**FIG.12**

## INTERNATIONAL SEARCH REPORT

| International application No. |
|---|
| **PCT/JP2022/014616** |

### A. CLASSIFICATION OF SUBJECT MATTER

*H02N 1/00*(2006.01)i
FI:   H02N1/00

According to International Patent Classification (IPC) or to both national classification and IPC

### B. FIELDS SEARCHED

Minimum documentation searched (classification system followed by classification symbols)

H02N1/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2015-27141 A (MITSUMI ELECTRIC CO) 05 February 2015 (2015-02-05) paragraphs [0074]-[0083], [0228]-[0269], fig. 6-7, 19-20 | 1, 3-6, 9-11, 16 |
| Y | | 2, 7-8, 12-14 |
| A | | 15 |
| Y | JP 2018-88780 A (UNIV TOKYO) 07 June 2018 (2018-06-07) paragraphs [0008]-[0015], fig. 1-2 | 2 |
| Y | JP 2017-89559 A (TOKYO INST TECH) 25 May 2017 (2017-05-25) paragraphs [0039]-[0044], fig. 8 | 7-8 |
| Y | JP 2011-172351 A (TAKENAKA KOMUTEN CO LTD) 01 September 2011 (2011-09-01) paragraphs [0058]-[0069], fig. 6-8 | 12-14 |
| A | | 15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 April 2022** | **17 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/014616**

| Patent document cited in search report | | | Publication date (day/month/year) | Patent family member(s) | | | Publication date (day/month/year) |
|---|---|---|---|---|---|---|---|
| JP | 2015-27141 | A | 05 February 2015 | US paragraphs [0117]-[0126], [0269], [0309], fig. 6-7, 19-20 WO EP CN | 2016/0164390 2015/012303 3026800 105453397 | A1 A1 A1 A | |
| JP | 2018-88780 | A | 07 June 2018 | US paragraphs [0016]-[0030], fig. 1-2 WO EP CN | 2021/0119556 2018/101017 3550714 109997305 | A1 A1 A1 A | |
| JP | 2017-89559 | A | 25 May 2017 | (Family: none) | | | |
| JP | 2011-172351 | A | 01 September 2011 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011172351 A

- JP 2014049557 A